# EUROPÄISCHE PATENTSCHRIFT

(11) **EP 2 432 631 B1**
(45) Veröffentlichungstag und Bekanntmachung des Hinweises auf die Patenterteilung: **08.07.2015**
(21) Anmeldenummer: 10720907.4
(22) Anmeldetag: 17.05.2010
(51) Int. Cl.: B29C 45/00, B29C 45/16, B60R 1/06, H05B 3/84

(54) **VERFAHREN ZUR HERSTELLUNG VON KUNSTSTOFF-FORMTEILEN MIT EINER INTEGRIERTEN LEITERBAHN**
METHOD FOR PRODUCING PLASTIC MOLDED PARTS HAVING AN INTEGRATED CONDUCTIVE TRACK
PROCÉDÉ DE FABRICATION DE PIÈCES MOULÉES EN PLASTIQUE PRÉSENTANT UN TRACÉ CONDUCTEUR INTÉGRÉ

(30) Priorität: 20.05.2009 DE 102009022238
(43) Veröffentlichungstag der Anmeldung: 28.03.2012
(73) Patentinhaber: KraussMaffei Technologies GmbH, 80997 München (DE)
(72) Erfinder: EICHLSEDER, Martin, 94167 Tettenweis (DE); PIRINGER, Helmut, 85598 Baldham (DE)
(74) Vertreter: Wilhelm, Ludwig
(86) Internationale Anmeldenummer: PCT/EP2010/056697
(87) Internationale Veröffentlichungsnummer: WO 2010/133530

(56) Entgegenhaltungen:
- EP-A2- 1 705 152
- WO-A1-2007/101747
- DE-A1- 3 506 011
- DE-A1- 10 118 487
- DE-A1- 19 720 808
- DE-A1- 19 724 320
- DE-A1-102008 015 853
- DE-B3-102005 034 895
- JP-A- 4 125 117
- JP-A- 6 170 883
- US-A1- 2003 128 164
- US-A1- 2004 003 908
- HERBST R ET AL: "DIE DREIFACHE KOMBINATION MEHRKOMPONENETEN-SPRITZGIESSEN VON THERMOPLASTEN ELASTOMEREN UND DUROPLASTEN" KUNSTSTOFFE, CARL HANSER VERLAG, MUNCHEN, DE, Bd. 90, Nr. 10, 1. Oktober 2000 (2000-10-01), Seite 82,84/85, XP000965889 ISSN: 0023-5563

## Beschreibung

Die Erfindung betrifft ein Verfahren zur Herstellung eines elektrisch beheizbaren Spiegel. Bevorzugtes Anwendungsgebiet ist die Herstellung elektrisch beheizbarer Aussenrückspiegel für Kraftfahrzeuge.

Aus der EP 0 732 865 B1 ist ein Formkörper mit einer Heizeinrichtung, insbesondere ein Aussenrückspiegel eines Kraftfahrzeuges bekannt. Der bekannte Aussenrückspiegel verfügt über eine Heizeinrichtung, die stromleitend verbundene und von einem Bindemittel versteifte Carbonfasern aufweist. Die Carbonfasem bilden mit dem Bindemittel ein Vlies aus Carbonfasern, wobei in dem Vlies zwischen den Carbonfasem Freiräume vorliegen. In einem Spritzgießverfahren wird das Vlies von elektrisch isolierendem Kunststoff umspritzt, wobei der Kunststoff auch die Freiräume durchdringt. Dadurch sind die Carbonfasem in dem fertigen Formkörper bis auf die Strornanschlussleitungen vollständig von dem elektrisch isolierenden Kunststoff umschlossen.

Aus der WO 2008/006483 A1 ist eine weitere Ausführungsform eines elektrisch beheizbaren Aussenrückspiegels für ein Kraftfahrzeug bekannt. Die Herstellung dieses Aussenrückspiegels erfolgt in der Weise, dass mittels eines thermischen Spritzverfahrens nach DIN EN 657 eine Leiterbahn aus einem Widerstandswerkstoff auf die Vorderseite eines Vlies aufgebracht wird und die Rückseite des Vlies nachfolgend mit einem Kunststoffmaterial hinterspritzt wird. Auf diese Weise bildet das Kunststoffmaterial zugleich die Trägerplatte für das Spiegelglas, das mittels eines Klebers oder eines Isolierlacks auf der Vorderseite des Vlies befestigt wird. Als Spiegelglas kommen sowohl mineralisches Glas als auch durchsichtige Substrate aus thermoplastischen oder duroplastischen Werkstoffen in Betracht, wobei die Reflexionsschicht sich auf Seiten der Trägerplatte befindet.

Aus der DE 10 2005 034 895 B3 ist ein Verfahren zum Aufbringen von Leiterbahnen auf Kunststoffbauteilen, insbesondere transparenten Kunststoffbauteilen bekannt, wobei a) eine Kratzfest-Lackschicht auf das Kunststoffbauteil aufgetragen wird, b) die Kratzfest-Lackschicht teilausgehärtet wird, c) zumindest eine Leiterbahn auf die teilausgehärtete Kratzfest-Lackschicht aufgetragen wird und d) das Kunststoffbauteil, die teilausgehärtete Kratzfest-Lackschicht und die zumindest eine Leiterbahn einem Härteschritt zur vollständigen Aushärtung der Kratzfest-Lackschicht und der Leiterbahnen ausgesetzt werden.

Nachteilig an dem vorbeschriebenen Stand der Technik ist, dass die Aussenrückspiegel in mehreren Arbeitsschritten aus mehreren einzelnen Teilen hergestellt werden, was sich ungünstig auf die Ausschussrate auswirkt.

Ausgehend von diesem Stand der Technik liegt der Erfindung die Aufgabe zugrunde, ein verbessertes Verfahren zur Herstellung eines Kunststoff-Formteils als Basis für einen Aussenrückspiegel anzugeben, das sich durch einen hohen Grad an Automation auszeichnet und bei dem die Ausschussrate vergleichsweise gering ist. Ausserdem soll hierbei eine ebene, optische Oberfläche ohne Einfallstellen erzielt werden.

Die Lösung dieser Aufgabe erfolgt durch ein Verfahren mit den Merkmalen des Anspruchs 1. Vorteilhafte Ausgestaltungen und Weiterentwicklungen finden sich in den Unteransprüchen.

Dadurch dass zunächst ein Substrat aus einem Trägerkörper aus einem elektrisch isolierenden Kunststoffmaterial mit einer Leiterbahn aus einem elektrisch leitenden Material auf oder in einer Oberfläche des Trägerkörpers hergestellt und dieses Substrat nachfolgend auf der mit der Leiterbahn ausgestatteten Oberfläche oder der dieser gegenüberliegenden Oberfläche mit einem flüssigen und elektrisch isolierenden Beschichtungsmaterial überflutet wird, werden alle Unebenheiten auf der so beschichteten Oberfläche des Substrats ausgeglichen. Es wird eine sehr dünne Schicht mit einer extrem glatten Oberfläche erzeugt, auf die nachfolgend eine Reflexionsschicht für den beheizbaren Spiegel, aufgebracht werden kann, beispielsweise durch Sputtern.

Die Unebenheiten treten durch unterschiedliche Schwindung im Material des Trägerkörpers in unterschiedlich dicken Bereichen des Trägerkörpers auf. Dies sind zum Einen diejenigen Bereiche, in denen sich Klipps zum Einbau des fertigen Rückspiegels in einen Halter befinden und zum anderen unterschiedlich dicke Bereiche im Trägerkörper, die sich dadurch ergeben, dass die Leiterbahn mehr oder weniger stark in eine Oberfläche eingebettet ist, so dass dort Vertiefungen vorliegen. In den daneben liegenden Bereichen ist der Trägerkörper demgegenüber dicker. Dadurch kommt es zu beiden Seiten des Trägerkörpers zu einer mehr oder weniger stark gewellten Oberfläche, die sich nicht unmittelbar zum Aufbringen einer reflektierenden Spiegelschicht eignet.

Das Substrat kann auf derjenigen Seite mit einer reflektierenden Schicht versehen werden, auf der sich die Leiterbahn befindet. In diesem Fall kann man davon sprechen, dass sich die Leiterbahn auf der Spiegelseite des Subtrates befindet. Das Substrat kann aber auch auf der gegenüberliegenden Seite mit einer reflektierenden Schicht versehen werden. In diesem Fall kann man davon sprechen, dass sich die Leiterbahn auf der Spiegelgegenseite befindet. Die Beschichtung ist immer dort vorzusehen, wo die reflektierende Schicht aufgebracht werden soll.

Ein fertiger Aussenrückspiegel zeichnet sich durch eine homogen beheizbare Oberfläche ohne punktuelle Temperaturspitzen (sogenannte Hotspots) aus. Falls sich die Leiterbahn auf der Spiegelseite befindet, verläuft sie sehr nahe an der Oberfläche des fertigen Formteils. Die beim Betrieb der Leiterbahn erzeugte Wärme braucht nur die dünne Schicht aus dem Überflutungsmaterial zu durchdringen. Dies ermöglicht ein rasches Aufheizen des Aussenrückspiegels. Falls sich die Leiterbahn auf der Spiegelgegenseite befindet, muss die erzeugte Wärme zwar durch das Substrat hindurch die sichtbare Oberfläche des Aussenrückspiegels erwärmen, was mehr Zeit beansprucht. Andererseits wird dadurch die Oberfläche besonders homogen beheizt.

Als Beschichtungs- bzw. Überflutungsmaterial kommen vorzugsweise flüssige Lacke zum Einsatz, beispielsweise ein UV-aushärtender Lack oder ein Mehrkomponenten-Reaktionslack, beispielsweise ein PUR-Lack oder ein Acryl-Lack, insbesondere ein Acryl-Lack auf PMMA-Basis. Mit solchen Lacken können ganz dünne Schichten im Bereich von etwa 10 µm bis 50 µm gebildet werden. Vorteilhaft ist, wenn der Lack eine nach dem Aushärten eine kratzfeste Beschichtung ergibt. Gerade bei langen Fließwegen, insbesondere bei einem großen Fließweg-Wanddicken-Verhältnis, sind solche Lacke vorteilhaft, da sie in der Viskosität ähnlich sind wie Wasser. Man spricht daher auch davon, dass sich das Beschichtungs- bzw. Überflutungsmaterial in einem mehr oder minder wässrigen Zustand befindet.

Denkbar ist aber auch eine Beschichtung mit einer niedrigviskosen Kunststoffschmelze, beispielsweise auf PA-Basis. Durch geeignet hohe Schmelze- und Werkzeugtemperaturen kann die Viskosität der Kunststoffschmelze sehr weit reduziert werden, so dass diese Kunststoffschmelze in ihrem Fließverhalten den zuvor genannten flüssigen Lacken ähnlich wird und ähnlich gut verarbeitet werden kann. Um lange Fließwege realisieren zu können, wird die Werkzeugtemperatur dynamisch im Prozess nach oben und nach unten gefahren. Es sind dünne Schichten im Bereich von etwa 100 µm bis 1000 µm erreichbar. Bei langen Fließwegen, insbesondere bei einem großen Fließweg-Wanddicken-Verhältnis, sind jedoch die oben genannten Lacke zu bevorzugen.

Für die Herstellung eines Substrats aus einem Trägerkörper aus einem elektrisch isolierenden Kunststoffmaterial mit einer Leiterbahn aus einem elektrisch leitenden Material auf oder in einer Oberfläche des Trägerkörpers kommen verschiedene Verfahrensvarianten in Betracht. In erster Linie können Techniken des Merhkomponentenspritzgießens zur Anwendung kommen. Je nach Verfahrensablauf wird dann zuerst die Leiterbahn in einem Spritzgießvorgang hergestellt und danach das elektrisch isolierende Kunststoffmaterial des Trägerkörpers angespritzt oder der Verfahrensablauf erfolgt umgekehrt, das heißt es wird zuerst der Trägerkörper aus einem elektrisch isolierenden Kunststoffmaterial mittels eines Spritzgießvorgangs hergestellt und nachfolgend die Leiterbahn aus einem elektrisch leitenden Kunststoff mittels eines Spritzgießvorgangs in Vertiefungen in der Oberfläche des Trägerkörpers ein- oder direkt auf eine Oberfläche des Trägerkörpers aufgebracht. Unter Spritzgießvorgang werden vorliegend alle Verfahrensabläufe verstanden, bei denen ein Kunststoffmaterial in ein Formwerkzeug eingespritzt und geformt wird. Darunter fallen auch die an sich bekannten Varianten an Spritzprägeverfahren. Eine Variante des Spritzprägens ist zum Beispiel das sogenannte Schließprägen, bei dem das Kunststoffmaterial in eine vergrößerte Kavität eingespritzt und beim nachfolgenden Verkleinern der Kavität verprägt wird. Eine weitere Variante des Spritzprägens ist zum Beispiel das sogenannte Öffnungsprägen, bei dem das Kunststoffmaterial in das sich öffnende Formwerkzeug eingespritzt und beim nachfolgenden Zufahren verprägt wird. Diese und weitere Verfahren des Spritzprägens sind dem Fachmann bekannt und brauchen hier nicht weiter im Einzelnen erläutert werden.

Bei dem Material für die Leiterbahn kann es sich um einen intrinsich elektrisch leitfähigen Kunststoff handeln (sogenannte ICP - Intrinsic Conductive Polymer) oder es können leitfhähige thermoplastische Compounds als elektrisch leitender Kunststoff vorgesehen werden. Der elektrische Widerstand solcher Compounds kann durch geeignete Auswahl der Füllstoffe und deren Konzentration in gewünschter Weise eingestellt werden.

In einer weiteren Ausführungsform kann in einem ersten Herstellungsschritt der Trägerkörper aus einem elektrisch isolierenden Kunststoffmaterial mittels eines Spritzgießvorgangs hergestellt werden, wobei in dem Trägerkörper Vertiefungen entsprechend der gewünschten Leiterbahn ausgebildet werden, und nachfolgend werden die Vertiefungen mit einem elektrisch leitenden flüssigen Lack geflutet, wobei in den Vertiefungen die Leiterbahn ausgebildet wird. Als elektrisch leitender Lack können Lacke der oben genannten Art verwenden werden, wobei der elektrische Widerstand über die Auswahl und Konzentration der Füllstoffe in gewünschter Weise eingestellt werden kann. Zum Fluten und Befüllen der Vertiefungen in dem Trägerkörper kann aber auch eine vergleichbar niedrigviskose elektrisch leitfähige Kunststoffschmelze verwendet werden. Um die Vertiefungen gegen die umgebende Fläche und gegen Werkzeugteile abzudichten, kann die Vertiefung zum Fluten nur zum Teil entformt bzw. freigegeben werden und der nicht entformte bzw. der nicht freigegebene Bereich bleibt als Tauchkante bzw. Abdichtung im Eingriff.

An den Kontaktstellen für die Stromzufuhr kann ein Einlegeteil vorgesehen werden, das von dem elektrisch leitenden Material der Leiterbahn und vorzugsweise zusätzlich von dem elektrisch isolierenden Kunststoffmaterial des Trägerkörpers umspritzt wird. Dieses Einlegeteil kann beispielsweise ein Art Stecker sein, dessen Kontaktstifte aus der Leiterbahn herausragen, um daran die elektrischen Leitungen anzuschließen.

Am Ende der Verfahrensschritte liegt ein Kunststoff-Formteil vor, das sich durch eine gute Steifigkeit und eine sehr glatte Oberfläche auszeichnet. Es muss lediglich noch eine Reflexionsschicht aufgebracht werden, beispielsweise durch Sputtern, um einen fertigen elektrisch beheizbaren Spiegel mit einer optischen glatten Oberfläche zu erhalten. Aufgrund der Festigkeit und Härte der Deckschicht aus dem Beschichtungsmaterial kann es auch nicht zu einem Verbiegen oder Verkratzen der Reflexionsschicht kommen. Gegebenenfalls können gleichwohl noch weitere Funktionsschichten, beispielsweise eine zusätzliche Schutzschicht, auf der Reflexionsschicht aufgebracht werden.

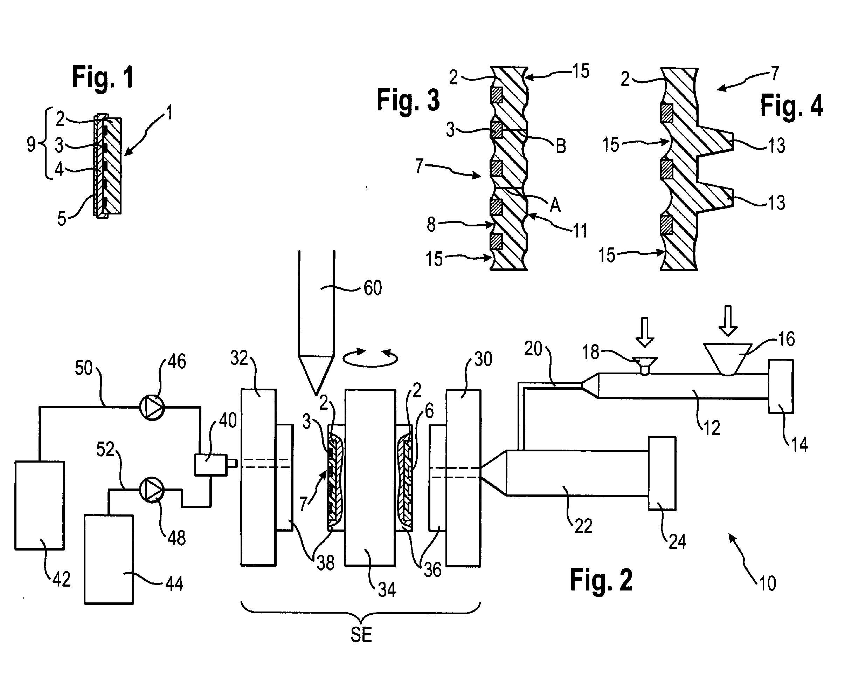

Nachfolgend soll die Erfindung anhand von Ausführungsbeispielen und unter Bezugnahme auf die Figuren 1 bis 13 näher erläutert werden.

Die Figur 1 zeigt einen Schnitt durch einen elektrisch beheizbaren Aussenrückspiegel 1 eines Kraftfahrzeugs. In einer Oberfläche einer Trägerplatte 2 aus einem elektrisch isolierenden Kunststoffmaterial befindet sich eine Leiterbahn 3 für eine elektrische Widerstandsheizung. Der Verlauf dieser Leiterbahn kann beispielsweise mäanderförmig oder serpentinenförmig sein. Andere Verläufe sind ebenso denkbar, je nach Anwendungsfall. Die Leiterbahn 3 und die freiliegende Oberfläche des Trägerkörpers 2 sind mit einer Kratzfestschicht 4 aus einem flüssigen Lack überzogen. Diese Schichten bilden zusammen ein Kunststoff-Formteil 9, auf dem sich die Reflexionsschicht 5 des Aussenrückspiegels befindet.

Figur 2 zeigt schematisch eine Spritzgießmaschine mit einer Wendeplatten-Schließeinheit SE, umfassend zwei äußere Formaufspannplatten 30 und 32 sowie eine mittlere um eine vertikale Achse drehbare Wendeplatte 34 als weiteren Formhälftenträger. Zwischen den beiden Trennebenen befinden sich die Formhälften von Spritzgießwerkzeugen 36 und 38, wobei in der Figur 2 die Schließeinheit in offenem Zustand gezeigt ist. Der besseren Übersicht halber nicht dargestellt sind Mittel zum Zu- und Auffahren der Schließeinheit SE sowie zum Erzeugen der Schließkraft. Diese sind dem Fachmann bekannt und brauchen daher an dieser Stelle nicht weiter beschrieben zu werden. Der rechten äußeren Formaufspannplatte 30 ist eine Plastifizier- und Einspritzeinrichtung 10 zur Herstellung einer Kunststoffschmelze für den Trägerkörper 2 zugeordnet. Im vorliegenden Beispiel umfasst diese einen Extruder 12 mit einem Drehantrieb 14, vorzugsweise einen Doppelschneckenextruder mit zwei gleichsinnig drehenden Schnecken, und eine Kolbeneinspritzvorrichtung 22 mit einem Linearantrieb 24, die über eine Leitung 20 miteinander verbunden sind. Über Einfülltrichter 16 und 18 können die Ausgangsmaterialien für die Kunststoffschmelze des Trägerkörpers bzw. der Trägerplatte 2 in den Extruder 12 eingegeben und dort aufbereitet werden. Beispielsweise kann über den Trichter 16 ein Granulat eines Basiskunststoffmaterials und über den Trichter 18 ein Glasfasermaterial zugegeben werden, so dass die Trägerplatte aus einem stabilen glasfaserhaltigen elektrisch isolierenden Kunststoff besteht. Über ein weiteres Spritzaggregat 60 (in L-Stellung oder in vertikaler Stellung) kann das Kunststoffmaterial für die Leiterbahn in das Spritzgießwerkzeug 38 eingebracht und mit dem Trägerkörper 2 verbunden werden. Der linken Formaufspannplatte 32 ist eine Polyurethan-Einrichtung zugeordnet, die einen Mischkopf 40 aufweist, der über Zuführleitungen 50 und 52 mit Behältnissen für eine Polyolkomponente 42 und eine Isocyanatkomponente 44 verbunden ist. Die entsprechenden Komponenten werden aus den Behältnissen 42 und 44 über zwischengeschaltete Pumpen 46 und 48 in den Mischkopf 40 gefördert. Vom Mischkopf 40 kann dieser PUR-Lack in das Formwerkzeug 38 eingebracht werden und die Oberfläche des Substrats 7, das von dem Trägerkörper 2 mit der darin eingegebetten Leiterbahn 3 gebildet wird, überfluten. Dort reagiert das Reaktionsgemisch aus, wobei Einfallstellen in der Oberfläche des Substrats 7 ausgeglichen und eine extrem glatte äußere Oberfläche erzeugt wird. Anstelle eines PUR-Lacks können auch andere flüssige Lacke verwendet werden, beispielsweise ein UV-aushärtender Lack oder ein Acryl-Lack, insbesondere ein Acryl-Lack auf PMMA-Basis. Falls schon eine Vormischung bereitgehalten wird, kann auf die dargestellten Vorratsbehälter 42, 44 mit Leitungen 50, 52 und Pumpen 46,48 verzichtet werden.

Das Überfluten mit dem Lack kann in der Weise erfolgen, dass in der Form 38 ausgehend von der geschlossenen Form eine Kavität erzeugt wird, in die der Lack injiziert werden kann. Anschließend kann gegebenenfalls ein Prägeschritt erfolgen, wobei die Kavität verkleinert und der Lack über die Oberfläche des Substrats verteilt wird und ausreagieren kann.

Am Ende des Verfahrensablaufs liegt ein Kunststoff-Formteil 9 vor, das aus den Schichten 2, 3 und 4 besteht und nach der Entnahme aus der Spritzgießmaschine nur noch mit der Reflexionsschicht 5 beschichtet werden muss. Im Bedarfsfalle können weitere Schichten auf der Reflexionsschicht aufgebracht werden.

In den Figuren 3 und 4 sind Substrate 7 aus dem Trägerkörper 2 und der Leiterbahn 3 schematisch und in stark vergrößertem Maßstab dargestellt. Die vorgenannten Einfallstellen 15 bilden sich infolge der unterschiedlichen Schwindung des Materials an unterschiedlich dicken Stellen der Trägerplatte 2. In den Bereichen ohne Vertiefungen (Linie A) erfolgt eine stärkere Schwindung als in den Bereichen, wo sich die Vertiefungen für die Leiterbahn 3 befinden (Linie B). Durch Gegenmassnahmen wie beispielsweise ein "geschicktes" Spritzprägen kann die Tiefe der Einfallstellen zwar reduziert werden. Jedoch verbleiben immer noch kleine Einfallstellen, die diese Oberflächen für unmittelbare optische Zwecke unbrauchbar machen. Infolge der Einfallstellen liegen zu beiden Seiten des Substrates "gewellte" Oberflächen 8 und 11 vor, die sich nicht für das Aufbringen einer Reflexionsschicht eignen. An denjenigen Stellen, an denen die Trägerplatte 2 Klipps 13 für die spätere Befestigung in einem Halter aufweist, sind die Einfallstellen 15 in stärkerem Masse ausgebildet, wie dies in dem Ausführungsbeispiel der Figur 4 dargestellt ist. Desweiteren können sich je nach Materialkombination von Leiterbahn 3 und Trägerplatte 2 auch Lücken oder Risse zwischen der Leiterbahn 3 und dem Trägerkörper 2 bilden, die von dem Beschichtungsmaterial ausgefüllt werden können.

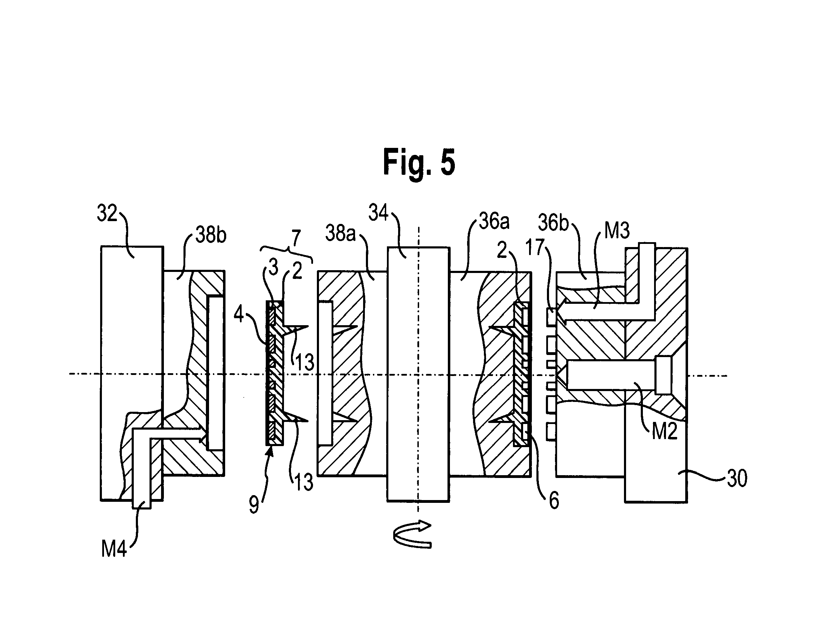

Die Figur 5 zeigt schematisch einen Verfahrensablauf unter Verwendung einer Wendeplatten-Schließeinheit SE und mit Formwerkzeugen 36, 38 mit Formhälften 36a, 36b, 38a, 38b, wobei die auf der Wendeplatte 34 befestigten Formhälften 36a und 38a identisch sind. In einem ersten Schritt wird die Trägerplatte 2 durch ein Spritzgießverfahren, beispielsweise ein Spritzprägeverfahren hergestellt, wobei das elektrisch isolierende Kunststoffmaterial über eine Materialzufuhr M2 in das erste Formwerkzeug 36 eingespritzt wird. Nachfolgend wird die Wendeplatte 34 um ein kleines Stück von der feststehenden Formaufspannplatte 30 weggefahren, so dass die Vertiefungen 6 für die Leiterbahn freigelegt werden. Das Auffahren erfolgt jedoch nur soweit, dass der Kern 17 mit der Kontur der Leiterbahn 3 auf der feststehenden Formhälfte 36b noch geringfügig in die Vertiefungen 6 hineinragt oder bündig mit diesen abschließt. Dieser Kern 17 bildet sozusagen Tauchkanten und bewirkt eine Abdichtung. Auf diese Weise wird eine Kavität für die Vertiefungen 6 gebildet, in die das Material für die Leiterbahn 3 über eine geeignete Materialzufuhr M3 eingegeben werden kann. Gegebenenfalls kann hierbei auch ein Prägeverfahren vorgesehen werden. Nach diesem Schritt befindet sich in der Formhälfte 36a auf der Wendeplatte 34 eine Trägerplatte 2 mit einer Leiterbahn 3, d.h. ein Substrat 7. Nach dem Öffnen der Wendeplatten-Schließeinheit SE wird die Wendeplatte 34 um 180° gedreht, wobei das Substrat 7 in der Formhälfte 36a verbleibt. Nachfolgend wird die Schließeinheit erneut zugefahren, bis ein Spalt zum Einbringen des Beschichtungsmaterials verbleibt. Dieser Spalt ist in der Regel größer als die Dicke der fertigen Schicht an Beschichtungsmaterial. Nun kann das Beschichtungsmaterial, zum Beispiel ein geeigneter Lack, in diesen Spalt eingegeben und das Substrat 7 mit einer Lackschicht 4 überflutet werden. Zeitversetzt oder simultan zum Überfluten werden die Formhälften 38b und 36a (bzw. 38a) zusammengefahren und das Beschichtungsmaterial auf dem Substrat 7 verteilt und geprägt, so dass am Ende die Lackschicht 4 auf dem Substrat 7 hergestellt ist. Dabei werden Einfallstellen 15 auf der Oberfläche des Substrats 7 (siehe diesbezüglich in den Figuren 3 und 4) ausgeglichen, so dass auf dem Substrat 7 mit der Lackschicht 4 eine glatte und ebene Oberfläche für einen nachfolgenden Beschichtungsvorgang zur Verfügung steht. Nach dem Aushärten der Lackschicht 4 kann die Schließeinheit SE aufgefahren und das fertige Kunststoff-Formteil 9 mit der integrierten Leiterbahn 3 und der Lackschicht 4 entnommen werden. In einem nachfolgenden Sputtervorgang wird eine Reflexionsschicht 5 auf die Lackschicht 4 aufgebracht, um einen Spiegel, insbesondere einen Aussenrückspiegel 1, zu erhalten, wie er in der Figur 1 dargestellt ist, vorliegend jedoch zusätzlich mit Klipps 13 zur späteren Befestigung des Aussenrückspiegels in einer entsprechenden Halterung an einem Fahrzeug. In dem hier beschriebenen Ausführungsbeispiel befindet sich die Leiterbahn auf der Spiegelseite.

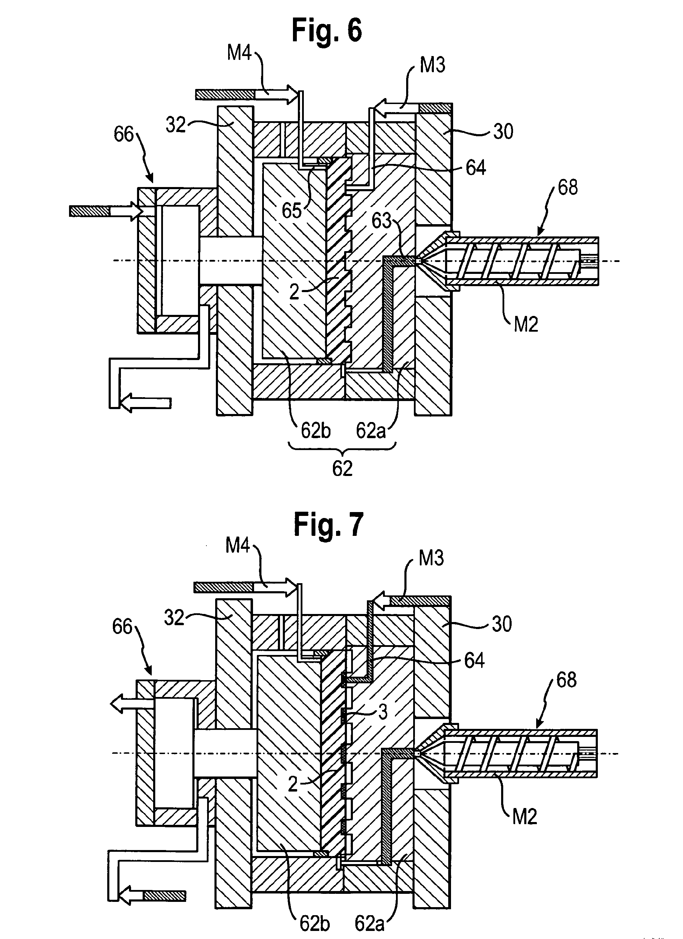

In den Figuren 6 - 11 ist eine weitere Ausführungsform eines erfindungsgemäßen Verfahrens schematisch dargestellt und soll nachfolgend beschrieben werden, wobei sich die Leiterbahn des fertigen Aussenspiegels auf der Spiegelgegenseite befindet. In diesem Ausführungsbeispiel kann auf den Einsatz der oben beschriebenen Wendeplatten-Schließeinheit SE verzichtet werden. In einer Schließeinheit mit einer feststehenden Formaufspannplatte 30 und einer beweglichen Formaufspannplatte 32 sind Formhälften eines Spritzprägewerkzeugs 62 befestigt, wobei die in den Figuren linke Formhäflte 62b mittels einer geeigneten Prägeeinrichtung 66, beispielsweise einer Kolben-Zylinder-Einheit, vor- und zurückverfahren werden kann. In den Formhälften sind geeignete Angusskanäle 63, 64, und 65 zum Einbringen der Materialen vorgesehen. Das Material für den elektrisch isolierenden Kunststoff des Trägerkörpers 2, beispielsweise PMMA, kann von einer Plastifizier- und Einspritzeinheit 68 aufbereitet und über die Materialzufuhr M2 mit dem Angusskanal 63 zugeführt werden. Das elektrisch leitende Material für die Leiterbahn 3 kann über eine Materialzufuhr M3 und einen Angusskanal 64 in der Formhälfte 62a und das Beschichtungsmaterial für die Lackschicht 4 über eine Materialzufuhr M4 und einen Angusskanal 65 in der Formhälfte 62b zugeführt werden.

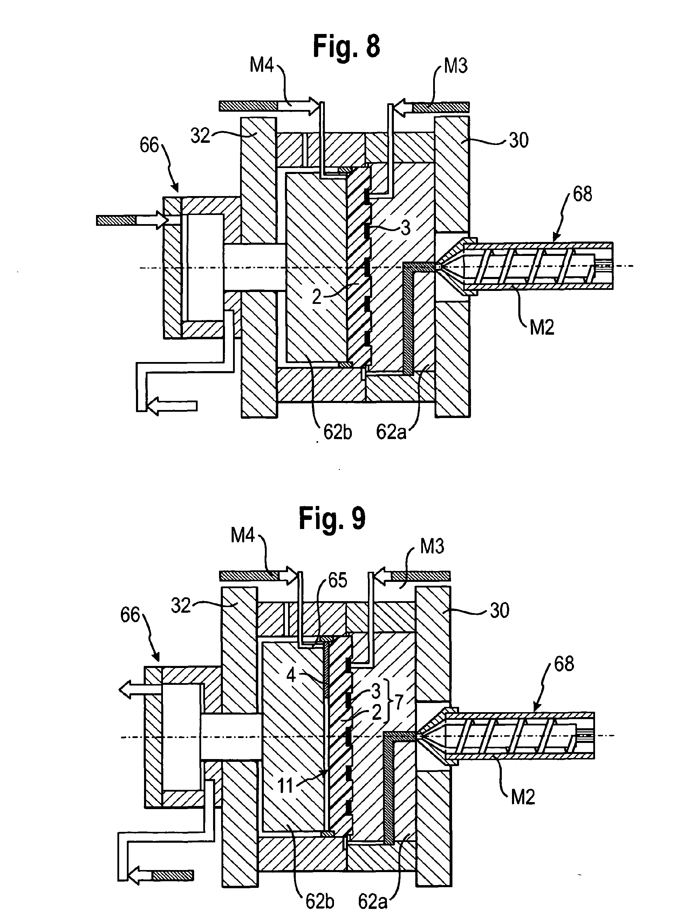

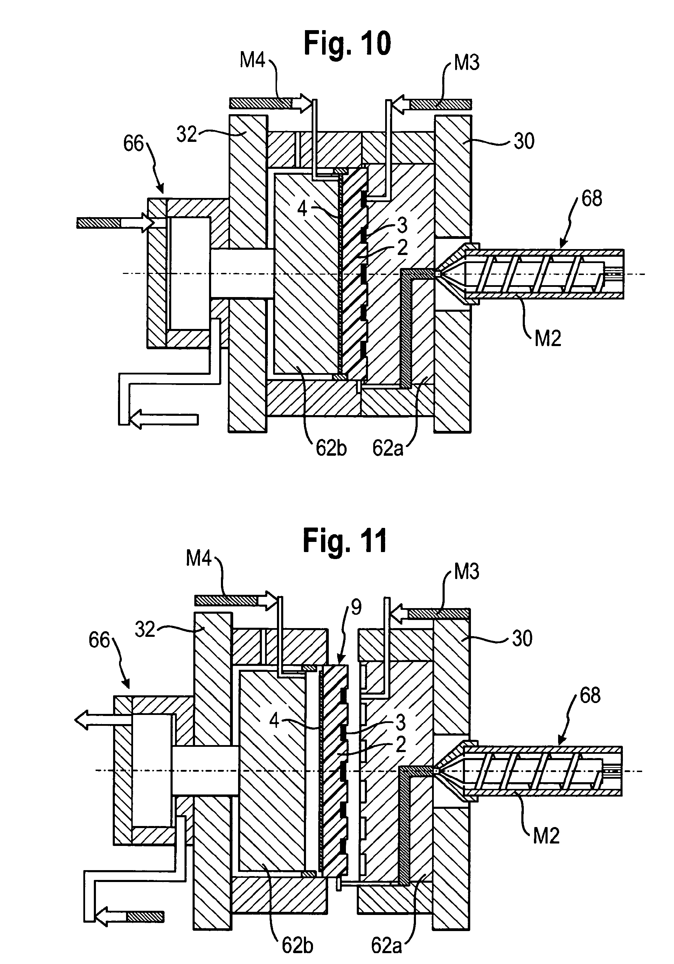

Der Verfahrensablauf ist wie folgt. In einem ersten Schritt wird das Material für den Trägerkörper 2 in eine entsprechende Kavität eingespritzt und gegebenenfalls verprägt (Figur 6). Im nächsten Schritt wird die Formhälfte 62b um ein kleines Stück von der Formhälfte 62a weg verfahren, beispielsweise mittels der Prägeeinrichtung 66, um einen Spalt entsprechend den Vertiefungen 6 für die Leiterbahn 3 zu bilden. Der Verfahrweg ist so bemessen, dass die Vorsprünge in der Formhälfte 62a, die den Kern 17 für die Leiterbahnstruktur bilden, im Eingriff mit den Vertiefungen 6 bleiben und diese abdichten. Über den Angusskanal 64 kann nunmehr das elektrisch leitende Material für die Leiterbahn 3 in die Vertiefungen eingespritzt (Figur 7) und verprägt werden (Figur 8), bis ein Subtrat 7 vorliegt, welches zu beiden Seiten die oben erwähnten, aber hier nicht dargestellten Einfallstellen aufweist. Im nächsten Schritt wird die Formhälfte 62b erneut um ein kleines Stück von der Formhälfte 62a weg verfahren, wobei nunmehr ein Spalt für das Beschichtungsmaterial, d.h. für die Lackschicht 4, zwischen dem Substrat 7 und der Formhälfte 62a gebildet wird (Figur 9). Zum Ausgleich der Einfallstellen auf der der Formhälfte 62b zugewandten Oberfläche 11 des Substrats 7 kann nun das Beschichtungsmaterial, z.B. ein geeigneter Lack, über eine Materialzufuhr M4 und einen Angusskanal 65 in den Spalt eingeleitet und das Substrat 7 überflutet werden. Nachfolgend (Figur 10) wird mittels der Prägeeinrichtung 66 die Formhälfte 62b wieder in Richtung der Formhälfte 62a bewegt und die Lackschicht 4 verprägt. Am Ende des Herstellungsprozess kann die Schließeinheit aufgefahren, das fertige Kunststoff-Formteil 9 entformt und aus dem Spritzgießwerkzeug entnommen werden (Figur 11). In einem nachfolgenden Bearbeitungsschritt kann dieses Kunststoff-Formteil 9 mit einer Reflexionsschicht auf der Lackschicht 4 versehen werden, um einen fertigen Aussenrückspiegel zu erhalten. Im Unterschied zu den oben beschriebenen Ausführungsbeispielen befindet sich die Leiterbahn 3 vorliegend auf der Spiegelgegenseite.

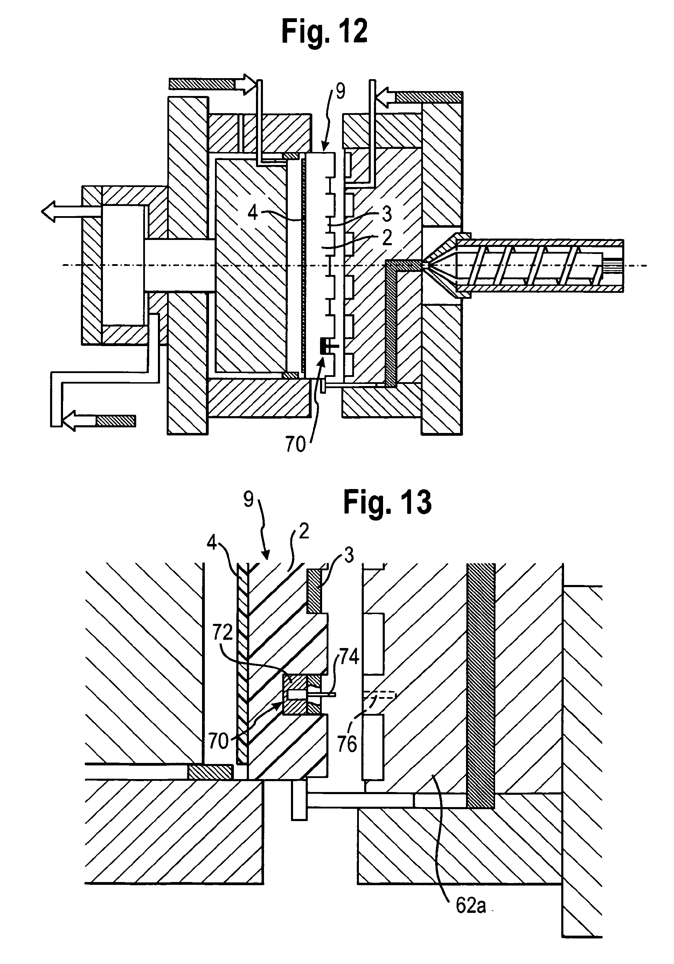

Um die elektrischen Kabel zur Stromversorgung der Leiterbahn 3 anschießen zu können, kann eine Art Stecker vorgesehen werden, wie dies im Zusammenhang mit den Figuren 12 und 13 kurz erläutert werden soll, wobei in der Figur 12 der besseren Übersicht halber die Schraffur für die Trägerplatte 2 und die schwarzen Felder für die Leiterbahn 3 nicht eingezeichnet sind. Der Stecker 70 besitzt einen Kopf 72 aus einem elektrisch gut leitenden Kunststoff und einen darin eingebetteten Stift 74 beispielsweise aus Kupfer oder einem anderen geeigneten Material. Dieser Stecker 70 kann als Einlegeteil von der Trägerplatte und dem Material der Leiterbahn umspritzt werden, wie dies schematisch in der Figur 13 dargestellt ist, wobei die Leiterbahn 3 in diesem Bereich mit einer Ausnehmung dargestellt ist, um den Kontaktstift 74 besser erkennen zu können. Tatsächlich ist der Kontaktstift 74 im Bereich der Leiterbahn 3 vom Material dieser Leiterbahn vollständig umschlossen. Die Formhäflte 62a verfügt über eine passende Ausnehmung 76 zur Aufnahme dieses Einlegeteils. Diese Ausnehmung 76 ist durch die gestrichelte Linie in den Figuren 12 und 13 angedeutet. Nach dem Umspritzen liegt ein vollflächiger Kontakt zwischen dem elektrisch leitenden Stecker 70 und der Leiterbahn 3 vor, so dass es beim Stromfluss an den Kontaktstellen nicht zu Überhitzungen kommen kann.

Während bei den oben beschriebenen Ausführungsbeispielen zunächst der Trägerkörper und nachfolgend die Leiterbahn gespritzt worden sind, könnte auch die umgekehrte Reihenfolge vorgesehen werden. Man könnte also in einem ersten Schritt die Leiterbahn herstellen und diese nachfolgend mit dem Material des Trägerkörpers umspritzen. Hierzu sind lediglich die Formhäflten in geeigneter Weise auszubilden und gegebenenfalls in einer Wendeplatten-Schließeinheit SE "richtig" anzuordnen und zu betreiben.

### Bezugszeichenliste

- 1: Aussenrückspiegel
- 2: Trägerplatte bzw. Trägerkörper
- 3: Leiterbahn
- 4: Lackschicht
- 5: Reflexionsschicht
- 6: Vertiefung
- 7: Substrat
- 8: Erste Oberfläche der Trägerplatte 2 (auf Seiten der Leiterbahn)
- 9: Kunststoff-Formteil mit integrierter Leiterbahn 3
- 10: Plastifizier- und Einspritzeinheit
- 11: Zweite Oberfläche der Trägerplatte 2 (auf der gegenüberliegenden Seite)
- 12: Extruder
- 13: Klipps
- 14: Drehantrieb
- 16: Einfülltrichter für Basiskunststoffgranulat
- 17: Kern der Leiterbahnstruktur
- 18: Einfülltrichter für Glasfasermaterial
- 20: Verbindungsleitung
- 22: Kolbeneinspritzvorrichtung
- 24: Linearantrieb
- 30: Rechte, äußere Formaufspannplatte
- 32: Linke, äußere Formaufspannplatte
- 34: Wendeplatte
- 36: Erstes Formwerkzeug
- 38: Zweites Formwerkzeug
- 40: Mischkopf
- 42: Behälter für Polyokomponente
- 44: Behälter für Isocyanatkomponente
- 46: Pumpe für Polyolkomponente
- 48: Pumpe für Isocyanatkomponente
- 50: Zuführleitung für Polyolkomponente
- 52: Zuführleitung für Isocyanatkomponente
- 60: Spritzeinheit für Leiterbahn-Kunststoffmaterial
- 62: Spritzprägewerkzeug
- 62a: Feststehende Formhälfte
- 62b: Bewegliche Formhälfte
- 63: Angusskanal
- 64: Angusskanal
- 65: Angusskanal
- 66: Prägeeinrichtung
- 68: Plastifizier- und Einspritzeinheit
- 70: Stecker
- 72: Kopf
- 74: Kontaktstift
- 76: Ausnehmung
- M2: Materialzufuhr für die Trägerplatte
- M3: Materialzufuhr für die Leiterbahn
- M4: Materialzufuhr für die Lackschicht

## Patentansprüche

1. Verfahren zur Herstellung eines elektrisch beheizbaren Spiegels (1),
**gekennzeichnet durch** folgende Schritte:
a) Herstellen eines Substrats (7) aus einem Trägerkörper (2) aus einem elektrisch isolierenden Kunststoffmaterial mit einer Leiterbahn (3) aus einem elektrisch leitenden Material auf oder in einer Oberfläche (8) des Trägerkörpers (2),
b) Überfluten der mit der Leiterbahn (3) ausgestatteten Oberfläche (8) des Substrats (7) oder der dieser gegenüberliegenden Oberfläche (11) des Substrates (7) mit einem flüssigen, elektrisch isolierenden Beschichtungsmaterial,
c) Aufbringen einer Reflexionsschicht (5) auf dem Beschichtungsmaterial (4).

2. Verfahren nach Anspruch 1
**dadurch gekennzeichnet, dass**
als Beschichtungsmaterial ein flüssiger Lack verwendet wird, insbesondere ein dünnflüssig wässriger und kratzfester Lack.

3. Verfahren nach Anspruch 1 oder 2,
**dadurch gekennzeichnet, dass**
als elektrisch leitendes Material ein elektrisch leitfähiger Kunststoff verwendet wird, insbesondere ein intrinsich elektrisch leitfähiger Kunststoff, ein elektrisch leitfhähiges thermoplastisches Compound oder ein elektrisch leitfähiger flüssiger Lack.

4. Verfahren nach Anspruch 2 oder 3,
**dadurch gekennzeichnet, dass**
als flüssiger Lack ein UV-aushärtender Lack oder ein Mehrkomponenten-Reaktionslack, beispielsweise ein PUR-Lack oder ein Acryl-Lack, insbesondere eine Acryl-Lack auf PMMA-Basis, verwendet wird.

5. Verfahren nach Anspruch 1,
**dadurch gekennzeichnet, dass**
als Beschichtungsmaterial eine niedrigviskose Kunststoffschmelze verwendet wird.

6. Verfahren nach einem der Ansprüche 1 bis 4,
**dadurch gekennzeichnet, dass**
im Herstellungschritt a) zunächst der Trägerkörper (2) aus einem elektrisch isolierenden Kunststoffmaterial mittels eines Spritzgießvorgangs hergestellt wird und dass nachfolgend die Leiterbahn (3) aus einem elektrisch leitenden Kunststoff mittels eines Spritzgießvorgangs in Vertiefungen (6) in der Oberfläche (8) des Trägerkörpers (2) eingebracht oder auf die Oberfläche (8) des Trägerkörpers (2) aufgebracht wird.

7. Verfahren nach einem der Ansprüche 1 bis 4,
**dadurch gekennzeichnet, dass**
im Herstellungsschritt a) zunächst die Leiterbahn (3) aus einem elektrisch leitenden Kunststoff mittels eines Spritzgießvorgangs hergestellt wird und dass nachfolgend der Trägerkörper (2) aus einem elektrisch isolierenden Kunststoffmaterial mittels eines Spritzgießvorgangs an die Leiterbahn (3) angebracht wird.

8. Verfahren nach einem der Ansprüche 1 bis 4,
**dadurch gekennzeichnet, dass**
im Herstellungschritt a) zunächst der Trägerkörper (2) aus einem elektrisch isolierenden Kunststoffmaterial mittels eines Spritzgießvorgangs hergestellt wird, wobei in dem Trägerkörper (2) Vertiefungen (6) entsprechend der gewünschten Leiterbahn (3) ausgebildet werden, und dass nachfolgend diese Vertiefungen (6) mit einem elektrisch leitfähigen flüssigen Lack geflutet werden, wobei in den Vertiefungen (6) die Leiterbahn (3) ausgebildet wird.

9. Verfahren nach Anspruch 8,
**dadurch gekennzeichnet, dass**
als elektrisch leitfähiger Lack ein UV-aushärtender Lack oder ein Mehrkomponenten-Reaktionslack, beispielsweise ein PUR-Lack oder ein Acryl-Lack, insbesondere eine Acryl-Lack auf PMMA-Basis, verwendet wird, wobei der Lack intrinsisch elektrisch leitend ist oder wobei in dem Lack elektrisch leitende Zusatzstoffe vorhanden sind, so dass der Lack der Leiterbahn (3) elektrisch leitend für eine elektrische Widerstandsheizung ist.

10. Verfahren nach Anspruch 8,
**dadurch gekennzeichnet, dass**
als elektrisch leitfähiger Lack eine niedrigviskose elektrisch leitende Kunststoffschmelze verwendet wird, insbesondere auf Basis eines intrinsisch elektrisch leitfähigen Kunststoffes oder auf Basis eines elektrisch leitfhähigen thermoplastischen Compounds, so dass der Lack der Leiterbahn (3) elektrisch leitend für eine elektrische Widerstandsheizung ist.

## Claims

1. A method for the production of an electrically heatable mirror (1), **characterized by** the following steps:
a) producing a substrate (7) of a carrier body (2) of an electrically insulating plastic material with a conductor path (3) of an electrically conducting material on or in a surface (8) of the carrier body (2),
b) flooding the surface (8) of the substrate (7) equipped with the conductor path (3) or the surface (11) of the substrate (7) lying opposite thereto with a liquid, electrically insulating coating material,
c) applying a reflective layer (5) on the coating material (4).

2. The method according to Claim 1, **characterized in that** a liquid lacquer is used as coating material, in particular a low-viscosity aqueous and scratch-resistant lacquer.

3. The method according to Claim 1 or 2, **characterized in that** an electrically conductive plastic is used as electrically conducting material, in particular an intrinsically electrically conductive plastic, an electrically conductive thermoplastic compound or an electrically conductive liquid lacquer.

4. The method according to Claim 2 or 3, **characterized in that** a UV-hardening lacquer or a multi-component reaction lacquer, for example a PUR lacquer or an acrylic lacquer, in particular an acrylic lacquer based on PMMA is used as liquid lacquer.

5. The method according to Claim 1, **characterized in that** a low-viscosity plastic melt is used as coating material.

6. The method according to one of Claims 1 to 4, **characterized in that** in production step a) firstly the carrier body (2) of an electrically insulating plastic material is produced by means of an injection moulding process and that subsequently the conductor path (3) of an electrically conducting plastic is introduced by means of an injection moulding process in depressions (6) in the surface (8) of the carrier body (2) or is applied onto the surface (8) of the carrier body (2).

7. The method according to one of Claims 1 to 4, **characterized in that** in the production step a) firstly the conductor path (3) of an electrically conducting plastic is produced by means of an injection moulding process and that subsequently the carrier body (2) of an electrically insulating plastic material is applied onto the conductor path (3) by means of an injection moulding process.

8. The method according to one of Claims 1 to 4, **characterized in that** in the production step a) firstly the carrier body (2) of an electrically insulating plastic material is produced by means of an injection moulding process, wherein depressions (6) corresponding to the desired conductor path (3) are formed in the carrier body (2), and that subsequently these depressions (6) are flooded with an electrically conductive liquid lacquer, wherein the conductor path (3) is formed in the depressions (6).

9. The method according to Claim 8, **characterized in that** a UV-hardening lacquer or a multi-component reaction lacquer, for example a PUR lacquer or an acrylic lacquer, in particular an acrylic lacquer based on PMMA, is used as electrically conductive lacquer, wherein the lacquer is intrinsically electrically conducting or wherein electrically conducting additives are present in the lacquer, so that the lacquer of the conductor path (3) is electrically conducting for an electric resistance heater.

10. The method according to Claim 8, **characterized in that** a low-viscosity electrically conducting plastic melt is used as electrically conductive lacquer, in particular on the basis of an intrinsically electrically conductive plastic or on the basis of an electrically conductive thermoplastic compound, so that the lacquer of the conductor path (3) is electrically conducting for an electric resistance heater.

## Revendications

1. Procédé de fabrication d'un miroir (1) pouvant être chauffé électriquement, **caractérisé par** les étapes suivantes :
a) fabrication d'un substrat (7) à partir d'un corps porteur (2) en matériau plastique électriquement isolant avec une piste conductrice (3) en matériau électriquement conducteur sur ou dans une surface (8) du corps porteur (2),
b) submersion de la surface (8) du substrat (7) dotée de la piste conductrice (3) ou de la surface (11) du substrat (7) qui lui est opposée avec un matériau de revêtement liquide et électriquement isolant,
c) application d'une couche réfléchissante (5) sur le matériau de revêtement (4).

2. Procédé selon la revendication 1, **caractérisé en ce qu'**une peinture liquide est employée en tant que matériau de revêtement, en particulier une peinture fluide aqueuse et résistante aux rayures.

3. Procédé selon la revendication 1 ou 2, **caractérisé en ce qu'**un plastique électriquement conductible est employé en tant que matériau électriquement conducteur, en particulier un plastique électriquement conductible intrinsèquement, un composé thermoplastique électriquement conductible ou une peinture liquide électriquement conductible.

4. Procédé selon la revendication 2 ou 3, **caractérisé en ce qu'**une peinture à durcissement aux UV ou une peinture à réaction multicomposantes, par exemple une peinture PUR ou une peinture acrylique, en particulier une peinture acrylique à base PMMA, est employée en tant que peinture liquide.

5. Procédé selon la revendication 1, **caractérisé en ce qu'**une fonte de plastique à faible viscosité est employée en tant que matériau de revêtement.

6. Procédé selon l'une des revendications 1 à 4, **caractérisé en ce qu'**à l'étape de fabrication a), le corps porteur (2) en matériau plastique électriquement isolant est d'abord fabriqué par un moulage par injection, et qu'ensuite, la piste conductrice (3) en matériau plastique électriquement conducteur est insérée dans des creux (6) dans la surface (8) du corps porteur (2) ou bien est appliquée sur la surface (8) du corps porteur (2) par un moulage par injection.

7. Procédé selon l'une des revendications 1 à 4, **caractérisé en ce qu'**à l'étape de fabrication a), la piste conductrice (3) en matériau plastique électriquement conducteur est d'abord fabriquée par un moulage par injection et qu'ensuite, le corps porteur (2) en matériau plastique électriquement isolant est appliqué sur la piste conductrice (3) par un moulage par injection.

8. Procédé selon l'une des revendications 1 à 4, **caractérisé en ce qu'**à l'étape de fabrication a), le corps porteur (2) en matériau plastique électriquement isolant est d'abord fabriqué par un moulage par injection, sachant que des creux (6) correspondant à la piste conductrice (3) souhaitée sont formés dans le corps porteur (2) et qu'ensuite, ces creux (6) sont submergés avec une peinture liquide électriquement conductible, sachant que la piste conductrice (3) est formée dans les creux (6).

9. Procédé selon la revendication 8, **caractérisé en ce qu'**une peinture à durcissement aux UV ou une peinture à réaction multicomposantes, par exemple une peinture PUR ou une peinture acrylique, en particulier une peinture acrylique à base PMMA, est employée en tant que peinture électriquement conductible, sachant que la peinture est électriquement conductrice intrinsèquement, ou sachant que des adjuvants électriquement conducteurs sont présents dans la peinture, de sorte que la peinture de la piste conductrice (3) est électriquement conductrice pour un chauffage par résistance électrique.

10. Procédé selon la revendication 8, **caractérisé en ce qu'**une fonte de plastique à faible viscosité électriquement conductrice est employée en tant que peinture électriquement conductible, en particulier à base d'un plastique électriquement conductible intrinsèquement ou à base d'un composé thermoplastique électriquement conductible, de sorte que la peinture de la piste conductrice (3) est électriquement conductrice pour un chauffage par résistance électrique.
